(19) Europäisches Patentamt
European Patent Office
Office européen des brevets

(11) Veröffentlichungsnummer: **0 189 773**
**B1**

(12) **EUROPÄISCHE PATENTSCHRIFT**

(45) Veröffentlichungstag der Patentschrift: **30.05.90**

(51) Int. Cl.[5]: **C 08 J 5/12**, C 08 J 7/04

(21) Anmeldenummer: **86100349.9**

(22) Anmeldetag: **13.01.86**

# (54) Verfahren zur Herstellung von Verbundartikeln aus Gummi und giessbaren Polyurethan-Elastomeren.

(30) Priorität: **26.01.85 DE 3502624**
**25.04.85 DE 3514864**

(43) Veröffentlichungstag der Anmeldung:
**06.08.86 Patentblatt 86/32**

(45) Bekanntmachung des Hinweises auf die Patenterteilung:
**30.05.90 Patentblatt 90/22**

(84) Benannte Vertragsstaaten:
**AT BE CH DE FR GB IT LI LU NL SE**

(56) Entgegenhaltungen:
**BE-A- 818 205**
**FR-A-2 122 949**

**CHEMICAL ABSTRACTS,m Band 84, Nr. 6, 9. Februar 1976, Seite 63, Zusammenfassung Nr. 32347u Columbus, Ohio, USA; & JP-A-50 96 632**

(73) Patentinhaber: **RHEIN-CHEMIE RHEINAU GMBH**
**Postfach 81 04 09 Mülheimer Strasse 24-28**
**D-6800 Mannheim 81 (DE)**

(72) Erfinder: **Schuster, Peter**
**Stengelhofstrasse 32**
**D-6800 Mannheim 81 (DE)**
Erfinder: **Punessen, Rudolf**
**Uhlandstrasse 7**
**D-6835 Brühl (DE)**
Erfinder: **Sauerbier, Michael, Dr.**
**Lochwiesenstrasse 4**
**D-6701 Altrip (DE)**
Erfinder: **Nützel, Karl, Dr.**
**Kornstrasse 23**
**D-6823 Neulussheim (DE)**

(74) Vertreter: **Jochum, Axel et al**
**c/o BAYER AG Zentralbereich Patente, Marken und Lizenzen**
**D-5090 Leverkusen 1, Bayerwerk (DE)**

EP 0 189 773 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gummiartikel, deren Anschaffungswert hoch ist, bzw. die, nachdem sie schadhaft und damit meist auch funktionsuntüchtig geworden sind, noch einen großen Restwert repräsentieren, werden üblicherweise repariert oder teilerneuert.

Diese Reparaturen und Teilerneuerungen sind meistens mit einem großen Anteil an manueller Arbeit verbunden und daher konstenintensiv. Ein klassisches Beispiel ist die Runderneuerung von Reifen. Nach Abtragen der Profillauffläche, Aufrauhen des Reifens und Aufbringung einer Grundierung werden lagenweise Kautschukfelle aufgebracht und angedrückt. Anschließend wird in beheizbaren Formen unter Druck vulkanisiert.

Bei Verwendung eines gießbaren Polyurethansystems würde das aufwendige Auflegen der Kautschukfelle entfallen.

Unter Verwendung einer geeigneten Form kann die Profillauffläche in einen Guß aufgebracht werden. Die Aushärtung erfolgt drucklos in der Form.

Gummiteile, die einem starken Verschleiß unterliegen, könnten zudem durch Wahl geeigneter Polyurethansysteme derart substituiert werden, daß bessere mechanische Eigenschaften, insbesondere größere Abriebfestigkeit resultierten.

Weitere Einsatzgebiete für gießbare Polyurethanelastomere wären Transportbänder, Laufbänder von Rolltreppen, Ketten für Kettenfahrzeuge und andere insbesondere dynamisch stark beanspruchte Gummiartikel.

Ein wesentliches Problem bei dem Verbund von Gummi und Polyurethan ist die mangelnde Haftung der beiden unterschiedlichen Systeme aufeinander, die den Einsatz eines Haftvermittlers nötig macht. Geeignete Substanzen sind bisher nicht bekannt geworden.

Aufgabe der Erfindung war es daher, als Haftvermittler geeignete Substanzen aufzufinden und so ein Verfahren zur Herstellung von Verbundartikeln aus Gummi und gießbaren Polyurethanelastomeren bereitzustellen.

Die Aufgabe konnte durch die Verwendung bestimmter aromatischer Sulfensäurechloride als Haftvermittler gelöst werden.

Gegenstand der Erfindung ist daher ein Verfahren zur Herstellung von Verbundartikeln aus Gummi und gießbaren Polyurethanen, dadurch gekennzeichnet, daß man als Haftvermittler Verbindungen der Formel

$$Cl{-}S{-}R(OH)_n$$

worin n eine ganze Zahl 1, 2 oder 3 bedeutet und R einen aromatischen Rest, beispielsweise einen gegebenenfalls weiter substituierten Phenylen- oder Naphthylenrest verwendet.

Die Phenylen- und Naphthylenreste können beispielsweise durch $C_1$ bis $C_{24}$-Alkyl oder durch Halogen ein- oder zweimal substituiert sein, insbesondere durch $C_9$ bis $C_{12}$-Alkyl.

Beispiele sind 2- und 4-Hydroxyphenylsulfensäurechlorid.

Die Addition von Sulfensäurechloriden an Doppelbindungen ist bekannt (Wittig und Vidal, Ber. *81* (1948) 368, 371), nicht jedoch die Herstellung eines Verbundes von Gummi und Polyurethan mit diesen Verbindungen.

Zur Herstellung des erfindungsgemäßen Verbundes von Gummi mit PU-Systemen, können die üblichen Gummiqualitäten auf Basis NR, SBR, CR', NBR, EPDM und anderen Dienkautschuken sowie Verschnitten aus diesen Qualitäten eingesetzt werden. Dabei kann es sich auch um Regenerate, anvulkanisierte und unvulkanisierte Kautschukmischungen handeln.

Wesentlich ist, daß die Gummiqualitäten noch Doppelbindungen enthalten, was bei Gummiartikeln aus Dien-Kautschuken stets gewährleistet ist.

Als PU-Systeme kommen alle Polyurethane kalt- wie heiß-härtend infrage. Das ausgehärtete Polyurethan kann auch Zellstruktur besitzen.

Geeignet sind alle glykolvernetzten und/oder aminvernetzten Polyether- oder Polyesterisocyanatprepolymere auf Basis aromatischer bzw. aliphatischer Isocyanate bzw. entsprechende sogenannte "one-shot-Systeme", d.h. Mischungen der Ausgangskomponenten ohne vorherige Umsetzung zum Prepolymer. Wesentlich ist, daß im Augenblick der Verbundbildung Isocyanatgruppen vorhanden sind, die in freier oder gegebenenfalls blockierter Form vorliegen können.

Die Blockierung, d.h. die Umsetzung von Isocyanatgruppen mit Schutzgruppen bildenden Reagentien, beispielsweise Caprolactam, ist dem Fachmann bekannt.

Bevorzugt sind aminvernetzte Polyether- und Polyesterisocyanatprepolymere auf Basis aromatischer Isocyanate.

Die infrage kommenden PU-System sind dem Fachmann bekannt.

Zur Herstellung des Verbundes Gummi/Polyurethan wird der Gummi oder die anvulkanisierte oder unvulkanisierte Kautschukmischung mit den oben beschriebenen Haftvermittlerkomponenten vorbehandelt. Anschließend wird das PU-System aufgegossen. Nach Aushärtung, gegebenenfalls unter Vulkanisation der Kautschukmischung, resultiert ein fester Verbund Gummi/Polyurethan.

Es hat sich als zweckmäßig erwiesen, die Haftvermittlerkomponenten nicht direkt auf den Gummi

aufzubringen, sondern in einem PU-System gelöst aufzutragen, wobei wieder die oben genannten PU-Systeme zum Einsatz kommen.

Gegebenenfalls enthalten die PU-Systeme lösungsvermittelnde organische Chemikalien.

Von den Haftvermittlern auf Basis Sulfensäurechlorid werden 5 bis 20 Gew.-%, bevorzugt 10—15 Gew.-% im PU-System gelöst. Von dieser Lösung werden 10 bis 1000 $g/m^2$, insbesondere 100—400 $g/m^3$, bevorzugt 130 bis 170 $g/m^3$ auf dem Gummi oder die Kautschukmischung aufgebracht.

Auf diese so vorbehandelten Gummiteile wird nach kurzer Temperung bei 80—150°C, bevorzugt 100 bis 120°C das PU-System in jeder gewünschten Dicke aufgetragen. Nach Aushärtung resultiert ein fester Verbund Gummi/Polyurethan.

Beispiel 1

Eine Gummiplatte auf Basis Naturkautschuk (ca. 170 $cm^3$, Schichtdicke ca. 2 mm wird mit einem Schwingschleifer (DIN-Korn für DIN-Abrieb) aufgerauht, mit Benzin (Siedebereich 90—95°C) gereinigt und 10 Minuten bei Raumtemperatur abgelüftet. 12,2 g 2-Hydroxy-5-nonyl-phenyl-sulfensäurechlorid werden in 96,2 g eines PU-Systems aus einem Polyesterpolyurethanprepolymer mit 3 bis 4 Gew.-% freiem NCO aus einem Polyester aus Adipinsäure, Glykol und Trimethylolpropan der OH-Zahl 115 und Triphenylmethantriisocyanat, einem aromatischen Diamin als Vernetzer und Methylenchlorid als Lösungsvermittler gelöst.

Von dieser Lösung werden 2,6 g auf die Gummiplatte mit einem Pinsel aufgetragen. Nach Ablüften und Erwärmen auf 110°C, wird ein 80 bis 90°C warmes PU-System nach Absatz 2 im Shorehärte-Bereich A 70—80 aufgegossen (Schichtdicke ca. 2 mm).

Nach Aushärtung werden Prüfkörper von 20×125 mm ausgestanzt und auf einer Zugprüfmaschine geprüft. Die aufzuwendende Kraft wird gemessen un das Rißbild visuell beurteilt.

Beispiel 2

Man verfährt wie bei Beispiel 1, jedoch ohne Haftvermittlerkomponente.

Prüfergebnisse (Zugwerte)

| | |
|---|---|
| Beispiel 1: | 150—160 Newton[a)] |
| Beispiel 2: | 40—60 Newton[b)] |

[a)] Ausreißen des Gummis und Abriß des Gummis.

[b)] Gummi und Polyurethan lassen sich ohne Zerstörung voneinander schälen.

**Patentansprüche**

1. Verfahren zur Herstellung von Verbundartikeln aus Gummi und Polyurethanen, dadurch gekennzeichnet, daß man als Haftvermittler Verbindungen der Formel

$$Cl—S—R(OH)_n$$

verwendet, worin

n eine ganze Zahl 1, 2 oder 3 und

R einen aromatischen Rest bedeuten.

2. Verfahren nach Anspruch 1, dadurch gekennzeichnet, daß der Gummi Doppelbindungen und das Polyurethan im Augenblick der Verbundbildung freie Isocyanatgruppen aufweist.

3. Verfahren nach Anspruch 1, dadurch gekennzeichnet, daß man den Haftvermittler in einem Polyurethansystem gelöst auf den Gummi aufbringt.

4. Verfahren nach Anspruch 1, dadurch gekennzeichnet, daß man den Haftvermittler auf den Gummi, eine unvulkanisierte oder anvulkanisierte Kautschukmischung aufbringt und den so behandelten Gummi bei 80 bis 150°C tempert.

5. Verfahren nach Anspruch 3, dadurch gekennzeichnet, daß das Sulfensäurechlorid in einem Polyurethansystem zu 5 bis 20 Gew.-%, bezogen auf das Polyurethansystem gelöst, und 10 bis 1000 g dieser Lösung pro $m^3$ Gummifläche aufgetragen werden.

6. Verfahren nach Anspruch 1, dadurch gekennzeichnet, daß als Polyurethansystem ein aminvernetztes Polyether- oder Polyesterprepolymer auf Basis aromatischer Isocyanate eingesetzt wird.

**Revendications**

1. Procédé de fabrication d'articles composites en caoutchouc et en polyuréthannes, caractérisé en ce que l'on utilise comme agent d'adhérence des composés de formule

$$Cl—S—R(OH)_n$$

dans laquelle

n représente un nombre entier qui est égal à 1, 2 ou 3 et

R représente un reste aromatique.

2. Procédé selon la revendication 1, caractérisé en ce que le caoutchouc présente des doubles liaisons et le polyuréthanne présente au moment de la formation du composite des groupes isocyanates libres.

3. Procédé selon la revendication 1, caractérisé en ce que l'on applique sur le caoutchouc l'agent d'adhérence dissous dans un système de polyuréthanne.

4. Procédé selon la revendication 1, caractérisé en ce que l'on applique l'agent d'adhérence sur le caoutchouc, ou sur un mélange de caoutchouc non vulcanisé ou vulcanisé prématurément et l'on cuit entre 80 et 150°C le caoutchouc ainsi traité.

5. Procédé selon la revendication 3, caractérisé en ce que le chlorure sulfénique est dissous dans un système de polyuréthanne à raison de 5 à 20% en poids par rapport au système de polyuréthanne, et en ce que 10 à 1000 g de cette solution sont appliqués par $m^2$ de surface du caoutchouc.

6. Procédé selon la revendication 1, caractérisé en ce que l'on utilise comme système de polyuréthanne un prépolymère de polyéther ou de polyester à base d'isocyanates aromatiques qui est réticulé par une amine.

## Claims

1. A process for the production of composite articles of rubber and polyurethanes, characterised in that compounds corresponding to the following formula

$$Cl—S—R(OH)_n$$

wherein

n stands for the integer 1, 2 or 3 and

R denotes an aromatic group are used as bonding agents.

2. A process according to Claim 1, characterised in that the rubber contains double bonds and the polyurethane is free from isocyanate groups at the moment of formation of the bond.

3. A process according to Claim 1, characterised in that the bonding agent is applied to the rubber as a solution in a polyurethane system.

4. A process according to Claim 1, characterised in that the bonding agent is applied to the rubber, an uncured or partially cured rubber mixture, and the rubber thus treated is tempered at 80 to 150°C.

5. A process according to Claim 3, characterised in that the sulphenic acid chloride is dissolved in a polyurethane system to a concentration of 5 to 20% by weight, based on the polyurethane system, and from 10 to 1000 g of this solution are applied per $m^3$ of rubber surface.

6. A process according to Claim 1, characterised in that the polyurethane system used is an amine-cross-linked polyether- or polyester-prepolymer based on aromatic isocyanates.